# EUROPÄISCHE PATENTSCHRIFT

(11) **EP 3 831 761 B1**
(45) Veröffentlichungstag und Bekanntmachung des Hinweises auf die Patenterteilung: **02.10.2024**
(21) Anmeldenummer: 19213618.2
(22) Anmeldetag: 04.12.2019
(51) Int. Cl.: B66B 13/14, B66B 13/26, B60R 3/02, H02H 7/085

(54) **AUTOMATISCHES TÜRSYSTEM UND VERFAHREN ZUM ANSTEUERN EINES AUTOMATISCHEN TÜRSYSTEMS**
AUTOMATIC DOOR SYSTEM AND METHOD FOR CONTROLLING AN AUTOMATIC DOOR SYSTEM
SYSTÈME DE PORTE AUTOMATIQUE ET PROCÉDÉ DE COMMANDE D'UN SYSTÈME DE PORTE AUTOMATIQUE

(43) Veröffentlichungstag der Anmeldung: 09.06.2021
(73) Patentinhaber: Siemens Mobility GmbH, 81739 München (DE)
(72) Erfinder: Braatz, Uwe, 30455 Hannover (DE); Nolte, Uwe, 30890 Barsinghausen (DE)
(74) Vertreter: Siemens Patent Attorneys

(56) Entgegenhaltungen:
- DE-T5- 112009 005 200
- DE-T5- 112010 003 619

## Beschreibung

Die Erfindung betrifft ein automatisches Türsystem nach Anspruch 1 und ein Verfahren zum Ansteuern eines solchen automatischen Türsystems nach Anspruch 10.

Ein automatisches Türsystem umfasst ein zu bewegendes Element, wie z.B. eine Türe, einen Schiebetritt oder eine Plattform für eine Spaltüberbrückung, einen Antrieb zur Bewegung des Elements zwischen zwei Positionen, wobei der Antrieb einen Motor und eine Antriebsmechanik umfasst, die dazu ausgebildet ist, eine von Motor erzeugte Drehkraft in eine das zu bewegende Element antreibende Bewegung umzusetzen. Das automatische Türsystem umfasst ferner eine Recheneinheit zur Steuerung des Motors basierend auf messtechnisch ermittelten Betriebsparameter des Antriebs.

Bei solchen automatischen Türsystemen ist häufig gefordert, dass elastische Puffer, die an dem zu bewegenden Element angebracht sind, in der Endposition des Elements nicht dauerhaft mit Druck beaufschlagt werden. Eine solche Druckbeaufschlagung kann z.B. durch einen eingeklemmten Gegenstand hervorgerufen sein. Eine andere Forderung besteht darin, dass bei einer Blockierung des zu bewegenden Elementes ein eingeklemmter Gegenstand, der die Blockierung hervorruft, mit einer geringen Ausziehkraft entfernt werden kann.

Üblicherweise wird eine Reduzierung oder gar Vermeidung einer Druckbeaufschlagung oder Klemmkraft durch eine oder mehrere der folgenden Maßnahmen bewirkt: mittels eines Drucksensor an einer Kante des zu bewegenden Elements kann ein Einklemmen eines Gegenstands oder eine übermäßige Druckbeaufschlagung detektiert werden; mittels einer Lichtschranke oder eines Lichtgitters kann während der Bewegung des zu bewegenden Elements überwacht werden, ob ein Gegenstand sich in dem Bewegungsweg befindet; durch einen elastischen (Gummi-)Puffer an der Kante des zu bewegenden Elements oder ein mechanisches Abkoppeln des zu bewegenden Elements vom Antriebssystem kann im Falle eines Einklemmens eines Gegenstandes die auf ihn wirkende Kraft auf ein bestimmtes Maß begrenzt werden. Unter ungünstigen Umständen können die genannten Maßnahmen jedoch auch nicht verhindern, dass die auf einen elastischen (GummiPuffer wirkenden Kräfte unerwünscht hoch sind und/oder eine vorgegebene maximale Ausziehkraft beim Entfernen eines eingeklemmten Gegenstands überschritten wird.

Die Druckschriften DE 11 2010 003619 T5 sowie DE 11 2009 005200 T5 offenbaren die Merkmale der Oberbegriffe der unabhängigen Patentansprüche 1 bzw. 10.

Es ist Aufgabe der vorliegenden Erfindung, ein automatisches Türsystem und ein Verfahren zum Ansteuern eines automatischen Türsystems anzugeben, welche baulich und/oder funktional verbessert sind.

Diese Aufgaben werden gelöst durch ein automatisches Türsystem gemäß den Merkmalen des Anspruches 1 und ein Verfahren zum Ansteuern eines automatischen Türsystems gemäß den Merkmalen des Anspruches 11. Vorteilhafte Ausgestaltungen sind in den abhängigen Ansprüchen wiedergegeben.

Die Erfindung schlägt ein automatisches Türsystem vor, das ein zu bewegendes Element, einen Antrieb zur Bewegung des Elements und eine Recheneinheit umfasst. Das zu bewegende Element kann beispielsweise eine Tür, insbesondere eines Verkehrsmittels, eines Aufzugs oder einer Werkzeugmaschine sein. Das zu bewegende Element kann auch ein sog. Schiebetritt, wie dieser in Verkehrsmitteln eingesetzt wird, sein. Unter ein zu bewegendes Element fällt auch eine Plattform für Spaltüberbrückung, wie diese beispielsweise bei Flurfahrzeugen oder Bahnsystemen zum Einsatz kommt.

Der Antrieb dient zur Bewegung des Elements zwischen einer vorgegebenen ersten Position und einer vorgegebenen zweiten Position. Geht man davon aus, dass das zu bewegende Element, unabhängig ob es sich um eine Tür, eine Plattform oder einen Schiebetritt handelt, eine Öffnung verschließt oder freigibt, so kann es sich bei der ersten Position um die Position des Elements handeln, bei der die Öffnung freigegeben ("offen") und bei der zweiten Position um die Position, bei der die Öffnung verschlossen ist ("geschlossen"). Ebenso kann die Definition der ersten und zweiten Position in umgekehrter Weise gewählt sein, d.h. in der ersten Position befindet sich das zu bewegende Element in einer geschlossenen Position ("geschlossen") und in einer zweiten Position ist die Öffnung zugänglich ("offen").

Der Antrieb umfasst einen Motor und eine Antriebsmechanik, die dazu ausgebildet ist, eine von dem Motor erzeugte Drehkraft in eine das zu bewegende Element antreibende Bewegung umzusetzen. Die Ausgestaltung der Antriebsmechanik hängt im Wesentlichen davon ab, welche Bewegung das zu bewegende Element zwischen der ersten und der zweiten Position vollzieht. Beispielsweise kann es sich bei der Antriebsmechanik um eine Spindel, ein Getriebe (z.B. Schneckengetriebe), einen Zahnriemen und dergleichen handeln. Grundsätzlich kann die Antriebsmechanik beliebig ausgebildet sein, sofern diese in der Lage ist, dass zu bewegende Element in vorgegebener Weise zwischen der ersten und der zweiten Position, und umgekehrt, zu bewegen.

Die Recheneinheit dient zur Steuerung des Motors, basierend auf messtechnisch ermittelten Betriebsparametern des Motors. Die Steuerung des Motors erfolgt typischerweise durch eine geeignete Drehzahlregelung, welche über die Antriebsmechanik auf das zu bewegende Element übertragen wird.

Erfindungsgemäß ist die Recheneinheit dazu ausgebildet, den Motor in seine Gegenrichtung umzusteuern, wenn und sobald durch die Recheneinheit erkannt wird, dass das Element die zweite vorgegebene Position, d.h. die Endposition, erreicht hat.

Bei Erkennung der zweiten vorgegebenen Position, d.h. der Endposition, wird der Motor für kurze Zeit umgesteuert, d.h. seine Drehrichtung wird umgekehrt. Dadurch kann bzw. wird das zu bewegende Element ein kleines Stück (z.B. wenige Millimeter) von seiner Endposition in die entgegengesetzte Richtung bewegt, so dass z.B. ein elastischer Puffer, der an dem zu bewegenden Element angebracht ist, in der Endposition des Elements nicht dauerhaft mit Druck beaufschlagt ist. Eine solche Druckbeaufschlagung kann einerseits durch ein Anschlagelement (Türrahmen, Türanschlag, Trittschwelle) und andererseits einen eingeklemmten Gegenstand hervorgerufen sein.

Diesem Vorgehen liegt die Überlegung zugrunde, dass das zu bewegende Element mit einer durch den Antrieb vorgegebenen, begrenzten Kraft von der ersten in seine zweite Position bewegt wird. Beim Erreichen der Endposition, bei dem das Element auf das korrespondierende Anschlagelement oder ein zwischen zu bewegendem Element und Anschlagelement befindliches Hindernis auftrifft, wird bis zum Erkennen der Endposition bzw. der Blockierung das zu bewegende Element mit dieser Kraft gegen das Anschlagelement oder Hindernis gedrückt. Die Andruckkraft wird durch die kinetische Energie der bewegten Masse des zu bewegenden Elements noch erhöht, da die kinetische Energie beim Auftreffen auf das Anschlagelement oder Hindernis über den kurzen Bremsweg in eine, unter Umständen hohe, Kraft umgewandelt wird. Diese Effekte können eine Verspannung der mechanischen Komponenten des Antriebs bewirken.

Würde der Motorstrom bei Erkennung dieses Hindernisses lediglich, z.B. unter Verwendung eines Stromendschalters, abgeschaltet, so wird jedoch durch die Verspannung der mechanischen Komponenten des Antriebs weiterhin eine Kraft auf das Anschlagelement oder Hindernis einwirken. Die dann erforderliche Kraft zum Lösen der Verspannung kann dann unter Umständen eine vorgegebene maximale Kraft übersteigen. Ist ein Hindernis zwischen zu bewegendem Element und dem Anschlagelement eingeklemmt, ist ein leichtes Entfernen des Hindernisses unter Umständen nicht möglich. Es ist sogar eine dauerhaft wirkende Kraft auf das Hindernis möglich.

Aufgrund antriebsinterner Reibungseffekte kann es sogar zu dem Effekt kommen, dass bei einem Anfahren des Antriebs aus dem Stillstand in Gegenrichtung eine Kraft aufgebracht werden muss, welche die Summe der oben genannten Gesamtkraft übersteigt. Ein Bewegen des zu bewegenden Elements wäre dadurch nicht mehr möglich.

Dies kann durch das erfindungsgemäße Vorgehen verhindert werden, indem eine kurzzeitige Umsteuerung des Motors in seine Gegenrichtung erfolgt, wenn und sobald durch die Recheneinheit erkannt wird, dass das Element seine Endposition erreicht hat, so dass sich das Element wenige Millimeter in seine Gegenrichtung bewegt.

Darüber hinaus sieht die Erfindung vor, den Motor während seines Betriebs zur Bewegung des Elements von seiner ersten Position zu seiner zweiten Position in seine Gegenrichtung umzusteuern, wenn und sobald durch die Recheneinheit ein die Bewegung des Elements blockierendes Hindernis erkannt wird. Bei Erkennung eines Hindernisses, welches die Bewegung des Elements von seiner ersten Position zu seiner zweiten Position blockiert, wird der Motor ebenso für kurze Zeit umgesteuert, d.h. seine Drehrichtung wird umgekehrt. Dadurch kann bzw. wird das zu bewegende Element ein kleines Stück (z.B. wenige Millimeter) in entgegengesetzte Richtung bewegt, so dass ein die Blockierung verursachender Gegenstand mit geringer Ausziehkraft aus dem automatischen Türsystem entfernt werden kann.

Des Weiteren ist vorgesehen, dass die Recheneinheit dazu ausgebildet ist, den Motor für eine vorgegebene Zeitdauer und/oder eine vorgegebene Wegstrecke des Elements in seine Gegenrichtung umzusteuern, so dass sich eine Reversierstrecke von wenigen Millimetern, d.h. 10 mm oder weniger ergibt. Die vorgegebene Zeitdauer und/oder die vorgegebene Wegstrecke des zu bewegenden Elements wird abhängig von der tatsächlichen Position des Elements variiert, an welcher das Hindernis erkannt wird. Beispielsweise können hierdurch Gummipuffer in den Endanschlägen entspannt werden, ebenso ist eine Entspannung von Federn in dem Antrieb dadurch möglich, um das Hindernis freizugeben oder mit geringer Kraft entfernen zu können.

Eine zweckmäßige Ausgestaltung sieht vor, dass die Recheneinheit dazu ausgebildet ist, die Umsteuerung des Motors in seine Gegenrichtung spätestens dann einzuleiten, wenn der Antrieb und/oder das zu bewegende Element zum Stillstand gekommen ist. Insbesondere ist vorgesehen, dass die Recheneinheit dazu ausgebildet ist, den Motor in seine Gegenrichtung umzusteuern, solange der Antrieb und/oder das zu bewegende Element noch nicht vollständig zum Stillstand gekommen ist. Damit wird verhindert, dass die Masse des zu bewegenden Elements vollständig zum Stillstand kommt, so dass ein "Nachschwingen" der Masse des bewegten Elements ausgenutzt werden kann, so dass beim Umsteuern in die Gegenrichtung keine Haftreibung überwunden werden muss. Auf diese Weise kann die von dem Motor aufzubringende Kraft verhältnismäßig gering gehalten werden.

Der zur Steuerung des Motors verwendete Betriebsparameter ist ein Motorstrom und/oder eine Motordrehzahl. Infolgedessen verfügt der Motor über interne und/oder externe Sensoren zur Detektion und Verarbeitung der entsprechenden Parameter. Insbesondere ist die Recheneinheit dazu ausgebildet, ein die Bewegung des Elements blockierendes Anschlagelement oder Hindernis zu erkennen, indem der aktuelle Motorstrom und/oder die aktuelle Motordrehzahl ausgewertet und, insbesondere mit jeweiligen Schwellwerten, verglichen werden. Dadurch kann auf zusätzliche Sensoren zum Erkennen eines die Bewegung des Elements blockierenden Hindernisses verzichtet werden. Dadurch können die Kosten für das zu steuernde System reduziert werden.

Gemäß einer Ausgestaltung wirken der Antrieb und das zu bewegende Element derart zusammen, dass im Betrieb eine im Wesentlichen translatorische Bewegung des Elements zwischen der vorgegebenen ersten und der vorgegebenen zweiten Position ausgeführt wird. Alternativ oder zusätzlich können der Antrieb und das zu bewegende Element derart zusammenwirken, dass im Betrieb eine rotatorische Bewegung des Elements zwischen der vorgegebenen ersten und der vorgegebenen zweiten Position ausgeführt wird.

Es wird ferner ein Verfahren zum Ansteuern des wie hierin beschriebenen automatischen Türsystems vorgeschlagen. Gemäß diesem Verfahren steuert die Recheneinheit den Motor in seine Gegenrichtung um, wenn und sobald durch die Recheneinheit erkannt wird, dass das Element die zweite vorgegebene Position erreicht hat. Hiermit sind die gleichen Vorteile verbunden, wie diese vorstehend in Verbindung mit dem automatischen Türsystem beschrieben wurden.

Die Recheneinheit steuert den Motor während seines Betriebs zur Bewegung des Elements von seiner ersten Position zu seiner zweiten Position in seine Gegenrichtung um, wenn und sobald durch die Recheneinheit ein die Bewegung des Elements blockierendes Hindernis erkannt wird.

Fürderhin steuert Recheneinheit den Motor für eine vorgegebene Zeitdauer und/oder eine vorgegebene Wegstrecke des Elements in seiner Gegenrichtung um. Dabei variiert die Recheneinheit die vorgegebene Zeitdauer und/oder die vorgegebene Wegstrecke des Elements abhängig von einer tatsächlichen Position des Elements, an welcher das die Bewegung des Elements blockierende Hindernis erkannt wird.

In einer zweckmäßigen Ausgestaltung des Verfahrens wird die Umsteuerung des Motors in seine Gegenrichtung durch die Recheneinheit spätestens dann eingeleitet, wenn der Motor bzw. der Antrieb bzw. das zu bewegende Element zum Stillstand gekommen ist. Insbesondere ist vorgesehen, dass die Recheneinheit den Motor in seine Gegenrichtung umsteuert, solange der Motor bzw. der Antrieb bzw. das Element noch nicht zum Stillstand gekommen ist.

Gemäß einer weiteren zweckmäßigen Ausgestaltung des Verfahrens verarbeitet die Recheneinheit zur Steuerung des Motors einen Motorstrom und/oder eine Motordrehzahl des Betriebsparameters. Insbesondere erkennt die Recheneinheit ein die Bewegung des Elements blockierendes Hindernis, indem der aktuelle Motorstrom und/oder die aktuelle Motordrehzahl ausgewertet und, insbesondere mit jeweiligen Schwellwerten, verglichen wird. Kriterium für das Vorliegen eines blockierenden Hindernisses ist, wenn der gemessene Motorstrom einen vorgegebenen maximalen Stromwert erreicht oder übersteigt und/oder die Motordrehzahl eine vorgegebene Minimaldrehzahl erreicht oder unterschreitet.

Die Erfindung wird nachfolgend näher anhand eines Ausführungsbeispiels in der Zeichnung beschrieben. Es zeigen:
- FIG 1: eine schematische Darstellung eines erfindungsgemäßen automatischen Türsystems;
- FIG 2: eine schematische Darstellung eines zu bewegenden Elements des erfindungsgemäßen automatischen Türsystems, wobei das zu bewegende Element einmal in einer vorgegebenen ersten Position und in einer vorgegebenen zweiten Position dargestellt ist;
- FIG 3: eine schematische Darstellung des zu bewegenden Elements aus FIG 2, das aufgrund eines blockierenden Hindernisses die zweite Position nicht erreicht; und
- FIG 4: eine schematische Darstellung des zu bewegenden Elements, das aufgrund der Erkennung der Blockierung der Bewegung des bewegenden Elements in Gegenrichtung umgesteuert wird.

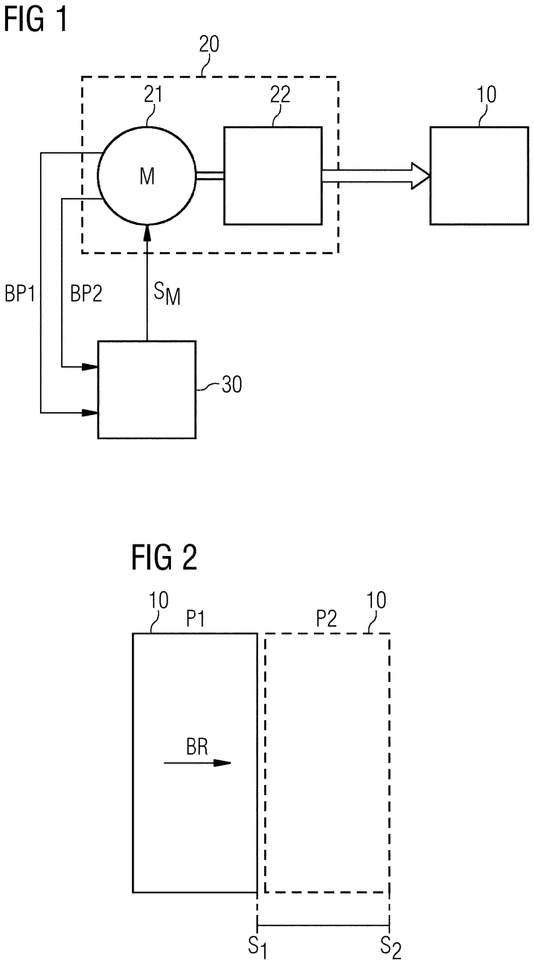

FIG 1 zeigt eine schematische Darstellung eines erfindungsgemäßen automatischen Türsystems. Das Türsystem umfasst ein zu bewegendes Element 10, einen Antrieb 20 zur Bewegung des Elements 10 und eine Recheneinheit 30 zur Steuerung des Antriebs 20.

Das zu bewegende Element 10 kann eine Tür eines Verkehrsmittels, eines Aufzugs oder einer Werkmaschine sein. Das zu bewegende Element 10 kann auch ein Schiebetritt, insbesondere eines Verkehrsmittels, sein. Ebenso kann das bewegende Element 10 eine Plattform für eine Spaltüberbrückung darstellen, wie diese bei Verkehrsmitteln, wie z.B. Flurfahrzeugen oder Zügen, vorkommt. In der nachfolgenden Beschreibung wird der Einfachheit halber auf eine Tür als zu bewegendes Element 10 Bezug genommen, wobei die gemachten Ausführungen in entsprechender Weise für die anderen zu bewegenden Elemente entsprechend gelten.

Der Antrieb 20 ist dazu ausgebildet, das Element 10 zwischen einer ersten vorgegebenen Position P1 und einer zweiten vorgegebenen Position P2 zu bewegen, wie dies schematisch in FIG 2 dargestellt ist. Hierzu verfügt der Antrieb 20 über einen durch die Recheneinheit 30 angesteuerten Motor 21 und eine Antriebsmechanik 22. Die Antriebsmechanik 22 ist dazu ausgebildet, die von dem Motor 21 erzeugte Drehung oder Drehkraft in eine das zu bewegende Element 10 antreibende Bewegung umzusetzen. In der nachfolgenden Beschreibung wird davon ausgegangen, dass das als Tür ausgebildete zu bewegende Element 10 eine im Wesentlichen translatorische Bewegung zwischen der vorgegebenen ersten und der vorgegebenen zweiten Position P1, P2 ausführt. Die Bewegung kann in der Praxis komplexer sein, insbesondere kann die translatorische Bewegung mit einer rotatorischen Bewegung überlagert sein. Ferner ist anzumerken, dass die weiteren Ausführungen auch für eine rein rotatorische Bewegung des Elements 10 gelten.

Die Antriebsmechanik 22 kann grundsätzlich beliebig ausgebildet sein. Üblicherweise umfasst die Antriebsmechanik 22 eine Spindel, einen Zahnriemen oder ein Getriebe, wie z.B. ein Schneckengetriebe. Auch Kombinationen davon können vorkommen.

Die Ansteuerung des Motors 21 durch die Recheneinheit 30 erfolgt über ein Steuersignal s_{M}. Das Steuersignal s_{M}, das beispielsweise eine vorbestimmte Drehzahlvorgabe umfasst, basiert auf messtechnisch ermittelten Betriebsparametern BP1, BP2 des Motors 21. Die Betriebsparameter BP1, BP2 können beispielsweise eine Motordrehzahl des Motors 21 und ein Motorstrom sein. Der Motorstrom kann beispielsweise in einer der Phasen des Motors 21 gemessen werden. Zur Erfassung der Betriebsparameter BP1, BP2 erforderliche Sensoren sind der Einfachheit halber nicht dargestellt. Diese können wahlweise interne und/oder externe Sensoren des Motors 21 sein.

FIG 2 zeigt die von dem Antrieb 20 zu bewegende Tür 10 mit durchgezogener Linie in der ersten Position P1 und mit durchbrochener Linie in der zweiten (endgültigen) Position P2 (Endposition). Die erste Position P1 kann beispielsweise eine Position sein, in der die Tür 10 eine nicht dargestellte Öffnung nicht verschließt, d.h. das automatische Türsystem befindet sich im Zustand "offen". Demgegenüber stellt die zweite Position P2 eine Position dar, in der die Tür 10 die nicht dargestellte Öffnung verschließt, so dass das automatische Türsystem sich im Zustand "geschlossen" befindet.

In der hierin gemachten Beschreibung wird davon ausgegangen, dass die Tür 10 von der ersten Position P1 ("offen") in die zweite Position P2 ("geschlossen") in der mit dem Pfeil gekennzeichneten Bewegungsrichtung BR von links nach rechts bewegt wird. Dabei bewegt sich eine rechte Seitenkante der Tür 10 von einem Ort s₁ (an dem die nicht dargestellte Öffnung maximal freigegeben ist) zu einem Ort s₂ (an dem die Öffnung verschlossen ist). Befindet sich die rechte Seitenkante am Ort s₂, so befinden sich die Seitenkante und die Tür 10 in einem definierten Endanschlag, in dem beispielsweise nicht dargestellte Gummipuffer gegen ein Anschlagelement, z.B. einen Türrahmen, drücken.

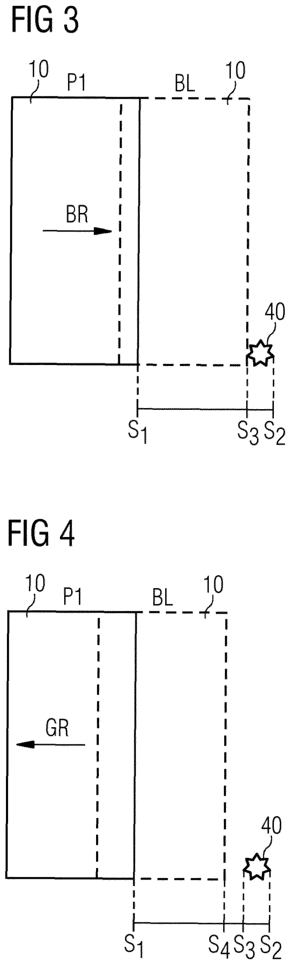

FIG 3 zeigt eine Situation, in der die Tür 10 durch Ansteuerung des Motors 21 von der ersten Position P1 in Richtung der zweiten Position P2 in Bewegungsrichtung BR verfahren wird. Aufgrund eines Hindernisses 40, z.B. eines festen Gegenstandes oder eines Körperteils eines Menschen, kann die rechte Seitenkante der Tür 10 lediglich bis zu einem Ort s₃ verfahren werden, wobei der Ort s₃ auf dem Weg zwischen den Orten s₁ und s₂ liegt. Ähnliches gilt, wenn die Tür 10 den Endanschlag erreicht (d.h. rechte Seitenkante befindet sich am Ort s₂) und der Gummipuffer gegen das Anschlagelement drückt.

Die Recheneinheit 30 ist erfindungsgemäß dazu ausgebildet, den Motor 21 während seines Betriebs zur Bewegung der Tür 10 von seiner ersten Position P1 zu seiner beabsichtigten zweiten Position P2 in eine Gegenrichtung GR (siehe FIG 4) umzusteuern, wenn und sobald durch die Recheneinheit 30 ein die Bewegung des Elements blockierendes Hindernis 40 (oder das Erreichen des Anschlagelements) erkannt wird. Die Erkennung des Hindernisses (oder des Anschlagelements) kann beispielsweise durch eine Auswertung der Betriebsparameter BP1, BP2 erfolgen. Die Blockierung der Bewegung der Tür 10 aufgrund des Hindernisses 40 hat zur Folge, dass sich die Geschwindigkeit und damit die Motordrehzahl aufgrund des Hindernisses reduziert. Erreicht die Motordrehzahl einen unteren Grenzwert, so deutet dies auf eine Blockade durch ein Hindernis hin. Gleichzeitig wird der durch die Blockade des Hindernisses oder das Erreichen der Endposition hervorgerufene Motorstrom erhöht. Erhöht sich der Motorstrom bis zu oder über einen vorgegebenen Maximalstrom hinaus, so wird dies als ein im Bewegungsweg befindliches Hindernis oder das Erreichen der Endposition interpretiert.

Um eine sichere Entscheidung treffen zu können, können die beiden genannten Kriterien miteinander kombiniert werden.

Dadurch, dass die Recheneinheit bei der Erkennung eines Hindernisses den Motor kurzzeitig in seine Gegenrichtung umsteuert, d.h. eine Drehrichtungsumkehr vornimmt, bewegt sich die Tür 10 minimal (d.h. weniger als 10 mm, bevorzugt sogar weniger als 5 mm) von dem Ort s₃, an dem die Blockade detektiert wird, zu einem Ort s₄ (der zwischen dem Ort s₁ und dem Ort s₃ liegt), so dass der Abstand der rechten Seitenkante zu der Endposition (Ort s₂) erhöht wird. Dadurch kann eine Klemmkraft, welche das Entfernen des Hindernisses 40 ermöglicht, reduziert oder sogar auf null reduziert werden. Gleiches gilt, wenn die Tür 10 den Endanschlag erreicht und der Gummipuffer gegen das Anschlagelement drückt. Hier wird die (dauerhaft) auf den Gummipuffer wirkende Kraft reduziert oder sogar auf null reduziert.

Die Recheneinheit 30 ist dazu ausgebildet, die Umsteuerung des Motors in seine Gegenrichtung GR spätestens dann einzuleiten, wenn der Antrieb 20 und/oder das Element 10 zum Stillstand gekommen ist. Bevorzugt ist es, wenn der Motor in seine Gegenrichtung GR umgesteuert wird, solange der Antrieb 20 und/oder die Tür 10 noch nicht zum Stillstand gekommen ist. Dadurch wird verhindert, dass die Masse der Tür 10 vollständig zum Stillstand kommt, wodurch ein Nachschwingen der bewegten Masse der Tür 10 ausgenutzt werden kann. Dadurch braucht beim Umsteuern keine Haftreibung überwunden zu werden, so dass die von dem Motor aufzubringende Kraft bzw. der erforderliche Motorstrom verhältnismäßig gering sind.

Die Recheneinheit 30 ist dazu ausgebildet, sobald eine Bewegung der Tür 10 blockierendes Hindernis 40 oder das Erreichen der Endposition erkannt wird, den Motor 21 für eine vorgegebene Zeitdauer und/oder eine vorgegebene Wegstrecke der Tür in seine Gegenrichtung umzusteuern. Mit anderen Worten bedeutet dies, dass der Abstand Δs, der zwischen den Orten s₃ und s₄ gebildet wird (d.h. Δs = s₃ - s₄), definiert vorgegeben sein kann. Insbesondere kann der Abstand Δs (die Wegstrecke) abhängig von der tatsächlichen (absoluten) Position des Elements variiert werden. Beispielsweise kann die Wegstrecke umso größer gewählt werden, je näher die Tür 10 bereits an ihrer endgültigen zweiten Position P2 ist. Dadurch können beispielsweise Gummipuffer in Endanschlägen entspannt werden, ebenso wie eine Entspannung von Federn im Antrieb möglich ist. Darüber hinaus kann auch durch die Definition einer vorgegebenen Wegstrecke und/oder einer vorgegebenen Zeitdauer sichergestellt werden, dass ein durch die Tür eingeklemmtes Hindernis sicher freigegeben werden kann.

## Patentansprüche

1. Automatisches Türsystem, umfassend:
- ein zu bewegendes Element (10);
- einen Antrieb (20) zur Bewegung des Elements (10) zwischen einer vorgegeben ersten Position (P1) und einer vorgegebenen zweiten Position (P2), wobei der Antrieb (20) einen Motor (21) und eine Antriebsmechanik (22) umfasst, die dazu ausgebildet ist, eine von dem Motor (21) erzeugte Drehkraft in eine das zu bewegende Element (10) antreibende Bewegung umzusetzen;
- eine Recheneinheit (30) zur Steuerung des Motors (21) basierend auf messtechnisch ermittelten Betriebsparametern des Motors (21),
wobei die Recheneinheit (30) dazu ausgebildet ist, den Motor (21) in seine Gegenrichtung (GR) umzusteuern, wenn und sobald durch die Recheneinheit (30) erkannt wird, dass das Element (10) die zweite vorgegebene Position (P2) erreicht hat, wobei die Recheneinheit (30) dazu ausgebildet ist, den Motor (21) während seines Betriebs zur Bewegung des Elements (10) von seiner ersten Position (P1) zu seiner zweiten Position (P2) in seine Gegenrichtung (GR) umzusteuern, wenn und sobald durch die Recheneinheit (30) ein die Bewegung des Elements (10) blockierendes Hindernis (40) erkannt wird, **dadurch gekennzeichnet, dass** die Recheneinheit (30) dazu ausgebildet ist, den Motor (21) für eine vorgegebene Zeitdauer und/oder eine vorgegebene Wegstrecke des Elements (10) in seine Gegenrichtung (GR) umzusteuern, so dass sich eine Reversierstrecke von 10 mm oder weniger ergibt und wobei die Recheneinheit (30) dazu ausgebildet ist, die vorgegebene Zeitdauer und/oder die vorgegebene Wegstrecke des Elements (10) abhängig von einer tatsächlichen Position des Elements (10) zu variieren, an welcher das Hindernis (40) erkannt wird.

2. Automatisches Türsystem nach Anspruch 1, bei dem die Recheneinheit (30) dazu ausgebildet ist, die Umsteuerung des Motors (21) in seine Gegenrichtung (GR) spätestens dann einzuleiten, wenn der Antrieb (20) und/oder das Element (10) zum Stillstand gekommen ist.

3. Automatisches Türsystem nach einem der vorhergehenden Ansprüche, bei dem die Recheneinheit (30) dazu ausgebildet ist, den Motor (21) in seine Gegenrichtung (GR) umzusteuern, solange der Antrieb (20) und/oder das Element (10) noch nicht zum Stillstand gekommen ist.

4. Automatisches Türsystem nach einem der vorhergehenden Ansprüche, bei dem der zur Steuerung des Motors (21) verwendete Betriebsparameter (BP1, BP2) ein Motorstrom und/oder eine Motordrehzahl ist.

5. Automatisches Türsystem nach Anspruch 4, bei dem die Recheneinheit (30) dazu ausgebildet ist, ein die Bewegung des Elements (10) blockierendes Hindernis (40) zu erkennen, indem der aktuelle Motorstrom und/oder die aktuelle Motordrehzahl ausgewertet, insbesondere mit jeweiligen Schwellwerten verglichen, werden.

6. Automatisches Türsystem nach einem der vorhergehenden Ansprüche, bei dem das zu bewegende Element (10) eine Tür ist, insbesondere für ein Verkehrsmittel, einen Aufzug oder eine Werkzeugmaschine, ist.

7. Automatisches Türsystem nach einem der vorhergehenden Ansprüche, bei dem das zu bewegende Element (10) ein Schiebetritt, insbesondere für ein Verkehrsmittel, ist.

8. Automatisches Türsystem nach einem der vorhergehenden Ansprüche, bei dem der Antrieb (20) und das zu bewegende Element (10) derart zusammenwirken, dass im Betrieb eine im Wesentlichen translatorische Bewegung des Elements (10) zwischen der vorgegebenen ersten und der vorgegebenen zweiten Position ausgeführt wird.

9. Automatisches Türsystem nach einem der vorhergehenden Ansprüche, bei dem der Antrieb (20) und das zu bewegende Element (10) derart zusammenwirken, dass im Betrieb eine rotatorische Bewegung des Elements (10) zwischen der vorgegebenen ersten und der vorgegebenen zweiten Position ausgeführt wird.

10. Verfahren zum Ansteuern eines automatischen Türsystems, das folgendes umfasst:
- ein zu bewegendes Element (10);
- einen Antrieb (20) zur Bewegung des Elements (10) zwischen einer vorgegeben ersten Position (P1) und einer vorgegebenen zweiten Position (P2), wobei der Antrieb (20) einen Motor (21) und eine Antriebsmechanik (22) umfasst, die dazu ausgebildet ist, eine von dem Motor (21) erzeugte Drehkraft in eine das zu bewegende Element (10) antreibende Bewegung umzusetzen;
- eine Recheneinheit (30) zur Steuerung des Motors (21) basierend auf messtechnisch ermittelten Betriebsparametern des Motors (21),
wobei die Recheneinheit (30) den Motor (21) in seine Gegenrichtung (GR) umsteuert, wenn und sobald durch die Recheneinheit (30) erkannt wird, dass das Element (10) die zweite vorgegebene Position (P2) erreicht hat, wobei die Recheneinheit (30) den Motor (21) während seines Betriebs zur Bewegung des Elements (10) von seiner ersten Position (P1) zu seiner zweiten Position (P2) in seine Gegenrichtung (GR) umsteuert, wenn und sobald durch die Recheneinheit (30) ein die Bewegung des Elements (10) blockierendes Hindernis (40) erkannt wird,
wobei die Recheneinheit (30) den Motor (21) für eine vorgegebene Zeitdauer und/oder eine vorgegebene Wegstrecke des Elements (10) in seine Gegenrichtung (GR) umsteuert, **dadurch gekennzeichnet, dass**
die Recheneinheit (30) die vorgegebene Zeitdauer und/oder die vorgegebene Wegstrecke des Elements (10) abhängig von einer tatsächlichen Position des Elements (10) variiert, an welcher das die Bewegung des Elements (10) blockierende Hindernis (40) erkannt wird.

11. Verfahren nach Anspruch 10, bei dem die Umsteuerung des Motors (21) in seine Gegenrichtung (GR) durch die Recheneinheit (30) spätestens dann eingeleitet wird, wenn der Antrieb (20) und/oder das Element (10) zum Stillstand gekommen ist.

12. Verfahren nach einem der Ansprüche 10 bis 11, bei dem die Recheneinheit (30) den Motor (21) in seine Gegenrichtung (GR) umsteuert, solange der Antrieb (20) und/oder das Element (10) noch nicht zum Stillstand gekommen ist.

13. Verfahren nach einem der Ansprüche 10 bis 12, bei dem die Recheneinheit (30) zur Steuerung des Motors (21) einen Motorstrom und/oder eine Motordrehzahl als Betriebsparameter (BP1, BP2) verarbeitet.

14. Verfahren nach Anspruch 13, bei dem die Recheneinheit (30) ein die Bewegung des Elements (10) blockierendes Hindernis (40) erkennt, indem der aktuelle Motorstrom und/oder die aktuelle Motordrehzahl ausgewertet, insbesondere mit jeweiligen Schwellwerten verglichen, werden.

## Claims

1. Automatic door system, comprising:
- an element (10) to be moved;
- a drive (20) for moving the element (10) between a specified first position (P1) and a specified second position (P2), the drive (20) comprising a motor (21) and a drive mechanism (22), which is designed to convert a turning force generated by the motor (21) into a movement driving the element (10) to be moved;
- a computing unit (30) for controlling the motor (21) on the basis of operating parameters of the motor (21) determined by measuring instruments,
the computing unit (30) being designed to switch the motor (21) to its opposite direction (GR) if and as soon as it is detected by the computing unit (30) that the element (10) has reached the second specified position (P2), the computing unit (30) being designed to switch the motor (21) to its opposite direction (GR) during its operation for moving the element (10) from its first position (P1) to a second position (P2) if and as soon as an obstacle (40) blocking the movement of the element (10) is detected by the computing unit (30), **characterized in that** the computing unit (30) is designed to switch the motor (21) to its opposite direction (GR) for a specified time period and/or a specified distance covered by the element (10) such that there is a reversing distance of 10 mm or less, and the computing unit (30) being designed to vary the specified time period and/or the specified distance covered by the element (10) depending on an actual position of the element (10) at which the obstacle (40) is detected.

2. Automatic door system according to Claim 1, in which the computing unit (30) is designed to initiate the switching of the motor (21) to its opposite direction (GR) at the latest when the drive (20) and/or the element (10) has come to a standstill.

3. Automatic door system according to one of the preceding claims, in which the computing unit (30) is designed to switch the motor (21) to its opposite direction (GR) as long as the drive (20) and/or the element (10) has not yet come to a standstill.

4. Automatic door system according to one of the preceding claims, in which the operating parameter (BP1, BP2) used for controlling the motor (21) is a motor current and/or a motor speed.

5. Automatic door system according to Claim 4, in which the computing unit (30) is designed to detect an obstacle (40) blocking the movement of the element (10) by the current motor current and/or the current motor speed being evaluated, in particular compared with respective threshold values.

6. Automatic door system according to one of the preceding claims, in which the element (10) to be moved is a door, in particular for means of transport, an elevator or a machine tool.

7. Automatic door system according to one of the preceding claims, in which the element (10) to be moved is a sliding step, in particular for a means of transport.

8. Automatic door system according to one of the preceding claims, in which the drive (20) and the element (10) to be moved interact in such a way that during operation a substantially translational movement of the element (10) is performed between the specified first position and the specified second position.

9. Automatic door system according to one of the preceding claims, in which the drive (20) and the element (10) to be moved interact in such a way that during operation a rotational movement of the element (10) is performed between the specified first position on the specified second position.

10. Method for controlling an automatic door system which comprises the following:
- an element (10) to be moved;
- a drive (20) for moving the element (10) between a specified first position (P1) and a specified second position (P2), the drive (20) comprising a motor (21) and a drive mechanism (22), which is designed to convert a turning force generated by the motor (21) into a movement driving the element (10) to be moved;
- a computing unit (30) for controlling the motor (21) on the basis of operating parameters of the motor (21) determined by measuring instruments,
the computing unit (30) switching the motor (21) to its opposite direction (GR) if and as soon as it is detected by the computing unit (30) that the element (10) has reached the second specified position (P2), the computing unit (30) switching the motor (21) to its opposite direction (GR) during its operation for moving the element (10) from its first position (P1) to a second position (P2) if and as soon as an obstacle (40) blocking the movement of the element (10) is detected by the computing unit (30),
the computing unit (30) switching the motor (21) to its opposite direction (GR) for a specified time period and/or a specified distance covered by the element (10), **characterized in that** the computing unit (30) varies the specified time period and/or the specified distance covered by the element (10) depending on an actual position of the element (10) at which the obstacle (40) blocking the movement of the element (10) is detected.

11. Method according to Claim 10, in which the switching of the motor (21) to its opposite direction (GR) is initiated by the computing unit (30) at the latest when the drive (20) and/or the element (10) has come to a standstill.

12. Method according to either of Claims 10 and 11, in which the computing unit (30) switches the motor (21) to its opposite direction (GR) as long as the drive (20) and/or the element (10) has not yet come to a standstill.

13. Method according to one of Claims 10 to 12, in which the computing unit (30) for controlling the motor (21) processes a motor current and/or a motor speed as the operating parameter (BP1, BP2).

14. Method according to Claim 13, in which the computing unit (30) detects an obstacle (40) blocking the movement of the element (10) by the current motor current and/or the current motor speed being evaluated, in particular compared with respective threshold values.

## Revendications

1. Système de porte automatique, comprenant :
- un élément (10) à mettre en mouvement ;
- un entraînement (20) pour la mise en mouvement de l'élément (10) entre une première position (P1) donnée à l'avance et une deuxième position (P2) donnée à l'avance, dans lequel l'entraînement (20) comprend un moteur (21) et une mécanique (22) d'entraînement, qui est constituée pour transformer une force de rotation produite par le moteur (21) en un mouvement entraînant l'élément (10) à mettre en mouvement ;
- une unité (30) informatique pour la commande du moteur (21) sur la base de paramètres de fonctionnement du moteur (21) déterminés en technique de mesure,
dans lequel l'unité (30) informatique est constituée pour commander le moteur (21) dans son sens (GR) contraire si et dès qu'il est détecté par l'unité (30) informatique que l'élément (10) a atteint la deuxième position (P2) donnée à l'avance, dans lequel l'unité (30) informatique est constituée pour commander le moteur (21) dans son sens (GR) contraire pendant son fonctionnement pour le mouvement de l'élément (10) de sa première position (P1) à sa deuxième position (P2), si et dès qu'il est détecté par l'unité (30) informatique un obstacle (40) bloquant le mouvement de l'élément (10), **caractérisé en ce que** l'unité (30) informatique est constituée pour commander dans son sens (GR) contraire le moteur (21) pendant une durée donnée à l'avance et/ou sur un parcours donné à l'avance de l'élément (10), de manière à donner un parcours d'inversion de 10 mm ou moins et dans lequel l'unité (30) informatique est constituée pour faire varier la durée donnée à l'avance ou le parcours donné à l'avance de l'élément (10), en fonction d'une position réelle de l'élément (10), où l'obstacle (40) est détecté.

2. Système de porte automatique suivant la revendication 1, dans lequel l'unité (30) informatique est constituée pour faire commencer la commande du moteur (21) dans son sens (GR) contraire, au plus tard lorsque l'entraînement (20) et/ou l'élément (10) est arrivé à l'état de repos.

3. Système de porte automatique suivant l'une des revendications précédentes, dans lequel l'unité (30) informatique est constituée pour commander le moteur (21) dans son sens (GR) contraire, tant que l'entraînement (20) et/ou l'élément (10) n'est pas encore arrivé à l'état de repos.

4. Système de porte automatique suivant l'une des revendications précédentes, dans lequel le paramètre (BP1, BP2) de fonctionnement utilisé pour la commande du moteur (21) est un courant du moteur et/ou une vitesse de rotation du moteur.

5. Système de porte automatique suivant la revendication 4, dans lequel l'unité (30) informatique est constituée pour détecter un obstacle (40) bloquant le mouvement de l'élément (10), en évaluant le courant en cours du moteur et/ou la vitesse de rotation en cours du moteur, en particulier par des valeurs de seuil respectives.

6. Système de porte automatique suivant l'une des revendications précédentes, dans lequel l'élément (10) à mettre en mouvement est une porte, en particulier d'un moyen de transport, d'un ascenseur ou d'une machine-outil.

7. Système de porte automatique suivant l'une des revendications précédentes, dans lequel l'élément (10) à mettre en mouvement est un marchepied coulissant, en particulier pour un moyen de transport.

8. Système de porte automatique suivant l'une des revendications précédentes, dans lequel l'entraînement (20) et l'élément (10) à mettre en mouvement coopèrent, de manière à exécuter en fonctionnement un mouvement sensiblement en translation de l'élément (10) entre la première position donnée à l'avance et la deuxième position donnée à l'avance.

9. Système de porte automatique suivant l'une des revendications précédentes, dans lequel l'entraînement (20) et l'élément (10) à mettre en mouvement coopèrent, de manière à effectuer en fonctionnement un mouvement de rotation de l'élément (10) entre la première position donnée à l'avance et la deuxième position donnée à l'avance.

10. Procédé de commande d'un système de porte automatique, qui comprend ce qui suit :
- un élément (10) à mettre en mouvement ;
- un entraînement (20) pour la mise en mouvement de l'élément (10) entre une première position (P1) donnée à l'avance et une deuxième position (P2) donnée à l'avance, dans lequel l'entraînement (20) comprend un moteur (21) et une mécanique (22) d'entraînement, qui est constituée pour transformer une force de rotation produite par le moteur (21) en un mouvement entraînant l'élément (10) à mettre en mouvement ;
- une unité (30) informatique pour la commande du moteur (21) sur la base de paramètres de fonctionnement du moteur (21) déterminé en technique de mesure,
dans lequel l'unité (30) informatique commande le moteur (21) dans son sens (GR) contraire, si et dès qu'il est détecté par l'unité (30) informatique, que l'élément (10) a atteint la deuxième position (P2) donnée à l'avance, dans lequel l'unité (30) informatique commande le moteur (21) dans son sens (GR) contraire pendant son fonctionnement pour la mise en mouvement de l'élément (10) de sa première position (P1) à sa deuxième position (P2), si et dès qu'il est détecté par l'unité (30) informatique un obstacle (40) bloquant le mouvement de l'élément (10),
dans lequel l'unité (30) informatique commande le moteur (21) dans son sens (GR) contraire pendant une durée donnée à l'avance et/ou une course donnée à l'avance de l'élément (10), **caractérisé en ce que** l'unité (30) informatique fait varier la durée donnée à l'avance et/ou la course donnée à l'avance de l'élément (10), en fonction d'une position réelle de l'élément (10), où l'obstacle (40) bloquant le mouvement de l'élément (10) est détecté.

11. Procédé suivant la revendication 10, dans lequel on fait commencer la commande du moteur (21) dans son sens (GR) contraire par l'unité (30) informatique, au plus tard lorsque l'entraînement (20) et/ou l'élément (10) est arrivé à l'état de repos.

12. Procédé suivant l'une des revendications 10 à 11, dans lequel l'unité (30) informatique commande le moteur (21) dans son sens (GR) contraire, tant que l'entraînement (20) et/ou l'élément (10) n'est pas encore arrivé à l'état de repos.

13. Procédé suivant l'une des revendications 10 à 12, dans lequel l'unité (30) informatique traite comme paramètre (BP1, BP2) de fonctionnement pour la commande du moteur (21), un courant du moteur et/ou une vitesse de rotation du moteur.

14. Procédé suivant la revendication 13, dans lequel l'unité (30) informatique détecte un obstacle (40) bloquant le mouvement de l'élément (10) en évaluant le courant en cours du moteur et/ou la vitesse de rotation en cours du moteur, en particulier par des valeurs de seuil respectives.
